# EUROPÄISCHE PATENTSCHRIFT

(11) **EP 2 431 099 B1**
(45) Veröffentlichungstag und Bekanntmachung des Hinweises auf die Patenterteilung: **24.08.2016**
(21) Anmeldenummer: 11007156.0
(22) Anmeldetag: 03.09.2011
(51) Int. Cl.: B05B 7/24, B05B 15/06, G05D 16/06, B05B 1/30, A01M 7/00, B05B 12/00, B05B 7/12, B05B 12/08

(54) **Sprühgerät**
Spray device
Pulvérisateur

(30) Priorität: 16.09.2010 DE 102010045708
(43) Veröffentlichungstag der Anmeldung: 21.03.2012
(73) Patentinhaber: Andreas Stihl AG & Co. KG, 71336 Waiblingen (DE)
(72) Erfinder: Schliemann, Harald, 71334 Waiblingen (DE)
(74) Vertreter: Reinhardt, Annette

(56) Entgegenhaltungen:
- EP-A1- 1 886 613
- EP-A2- 1 672 458
- WO-A1-00/16177
- WO-A1-00/39651
- WO-A1-2011/030080
- CN-Y- 2 808 329
- DE-A1- 1 607 404
- DE-B- 1 167 615
- DE-T2- 69 412 232
- JP-A- H0 259 062
- JP-U- S5 891 463
- US-A1- 2003 080 445

## Beschreibung

Die Erfindung betrifft ein Sprühgerät der im Oberbegriff des Anspruchs 1 angegebenen Gattung.

Aus der WO 2010/008374 A1 ist ein rückengetragenes Blasgerät bekannt, bei dem dem Luftstrom aufgrund des an der Düse erzeugten Unterdrucks Sprühmittel zudosiert wird. Der an der Düse entstehende Unterdruck ist zum Einen von der Drehzahl des Motors und zum Anderen von der Höhe abhängig, in der die Düse bezogen auf den Sprühmitteltank angeordnet ist. Im Betrieb kann der Benutzer sowohl nach unten als auch nach oben sprühen. Durch die vertikale Schwenkbewegung des Blasrohrs ergibt sich ein Unterschied der Höhendifferenz zwischen Düse und Sprühmitteltank und damit eine Änderung des hydrostatischen Drucks an der Düse, der die zugeführte Sprühmittelmenge deutlich beeinflusst.

Rückengetragene Blasgeräte sind auch aus den Druckschriften DE 1 607 404 A1, JP S58-091463 U und EP 1 886 613 A1 bekannt.

Jede dieser Druckschriften offenbart ein Sprühgerät gemäß dem Oberbegriff vom Anspruch 1.

Es ist auch bekannt, das Sprühmittel über eine Pumpe in das Blasrohr zu fördern. Dadurch wird der Aufbau des Sprühgeräts jedoch komplexer, und aufgrund der zusätzlichen Teile erhöht sich das Gewicht des Sprühgeräts.

Aus den Druckschriften DE 1 167 615 B, DE 694 12 232 T2, EP 1 672 458 A2, JP H02-059062 A, WO 00/39651 A1, CN 2808329 Y und WO 00/16177 A1 sind Druckregler für Spritzgeräte bekannt. Bei derartigen Spritzgeräten variiert der Druck im Spritzmittelbehälter. Der Druckregler dient dazu, den Spritzmitteldruck auf einen konstXanten Druck zu regeln.

Der Erfindung liegt die Aufgabe zugrunde, ein Sprühgerät der gattungsgemäßen Art zu schaffen, das einfach aufgebaut ist und einen gleichmäßigen Sprühmittelaustrag gewährleistet.

Diese Aufgabe wird durch ein Sprühgerät mit den Merkmalen des Anspruchs 1 gelöst.

Über den Druckregler in der Sprühmittelleitung lassen sich die Druckunterschiede, die aufgrund der unterschiedlichen Arbeitshöhen des Blasrohrs beim Schwenken im Betrieb entstehen, ausregeln. Der Druckregler führt der Düse das Sprühmittel unter konstantem Druck zu. Eine separate Pumpe wird nicht benötigt. Das Sprühmittel kann allein aufgrund des Unterdrucks an der Austrittsdüse und des geodätischen Druckunterschieds zwischen Sprühmitteltank und Düse zudosiert werden.

Vorteilhaft verlässt der Luftstrom das Blasrohr durch eine Austrittsöffnung. Der Druckregler und die Düse sind insbesondere benachbart zur Austrittsöffnung an dem Blasrohr angeordnet. Dadurch, dass Druckregler und Düse unmittelbar benachbart zueinander angeordnet sind, ist der Druckunterschied aufgrund der Höhendifferenz zwischen Druckregler und Düse minimal. Die Anordnung der Düse benachbart zur Austrittsöffnung führt zu einem guten Sprühmittelaustrag.

Vorteilhaft ist zwischen dem Druckregler und der Düse in der Sprühmittelleitung eine Dosiereinrichtung für Sprühmittel angeordnet. Der Druckregler ist demnach stromauf der Dosiereinrichtung angeordnet. Die Dosiereinrichtung ist vorteilhaft unmittelbar benachbart zu der Düse angeordnet.

Vorteilhaft besitzt der Druckregler eine Außerbetriebsstellung. Dadurch ist ein Entleeren des Behälters über die Dosiereinrichtung möglich. In seiner Betriebsstellung würde der Druckregler aufgrund der Druckverhältnisse den Durchfluss durch den Druckregler sperren, so dass ein Entleeren des Sprühmittelbehälters nicht möglich wäre.

Der Druckregler ist vorteilhaft als Membranregler ausgebildet. Der Druckregler besitzt insbesondere einen Regelraum, eine den Regelraum begrenzende Regelmembran und ein Einlassventil in den Regelraum, dessen Stellung an die Stellung der Regelmembran gekoppelt ist. Das Einlassventil ist dabei vorteilhaft in seine Schließrichtung federbelastet. Es kann vorgesehen sein, dass die dem Regelraum abgewandte Seite der Regelmembran mit Umgebungsluft beaufschlagt ist. Besonders vorteilhaft ist die dem Regelraum abgewandte Seite der Regelmembran mit dem Innenraum des Sprühmitteltanks verbunden. Dadurch dient der Druck im Inneren des Sprühmitteltanks als Referenzdruck. Dies ist insbesondere dann vorteilhaft, wenn der Sprühmitteltank druckbeaufschlagt ist und der Druck im Sprühmitteltank vom Umgebungsdruck abweicht.

Ein einfacher Aufbau ergibt sich, wenn der Druckregler ein Bedienelement besitzt, das in einer Außerbetriebsstellung die Regelmembran auslenkt und dadurch das Einlassventil öffnet. Die Regelmembran wird demnach von dem Bedienelement unabhängig von den herrschenden Druckverhältnissen an der Regelmembran in die Öffnungsstellung des Einlassventils gedrückt.

Um eine gute Förderung von Sprühmittel zu erreichen, ist vorgesehen, dass der Sprühmitteltank druckbeaufschlagt ist. Dies kann auf einfache Weise dadurch erreicht werden, dass der Sprühmitteltank über eine Druckleitung mit einem Überdruckbereich des Gebläses verbunden ist. Vorteilhaft besitzt das Gebläse ein Gebläserad, das in einer Gebläsespirale angeordnet ist. Die Druckleitung mündet insbesondere in einen Überdruckbereich der Gebläsespirale.

Bei Arbeitspausen lässt der Bediener den Gashebel los, so dass die Drehzahl des Antriebsmotors und des Gebläserads sinkt. Dadurch wird in der Gebläsespirale nur noch ein geringer Überdruck erzeugt. Damit fällt auch der Druck im Sprühmitteltank sehr rasch ab. Gibt der Bediener erneut Gas, muss der Druck im Sprühmitteltank zunächst wieder aufgebaut werden. Um diese Zeitverzögerung zu verringern, kann in der Druckleitung ein zum Sprühmitteltank öffnendes Rückschlagventil angeordnet sein. Dadurch wird der Druckabbau im Sprühmitteltank vermindert.

Eine einfache konstruktive Gestaltung ergibt sich, wenn der Druckregler über eine das Blasrohr mindestens teilweise umgreifende Befestigungsklammer am Blasrohr festgelegt ist. Ein so gestalteter Druckregler kann auch bei bestehenden Sprühgeräten auf einfache Weise nachgerüstet werden.

Ausführungsbeispiele der Erfindung werden im Folgenden anhand der Zeichnung erläutert. Es zeigen:
- Fig. 1: eine Seitenansicht eines Sprühgeräts,
- Fig. 2 und 3: schematische Darstellungen der Sprühmittelleitung und Druckleitungen von Sprühgeräten,
- Fig. 4: eine perspektivische Darstellung eines Druckreglers,
- Fig. 5: eine Draufsicht auf den Druckregler aus Fig. 4,
- Fig. 6: einen Schnitt entlang der Linie VI-VI in Fig. 5,
- Fig. 7: einen Schnitt entlang der Linie VII-VII in Fig. 5,
- Fig. 8: eine Schnittdarstellung des Druckreglers entsprechend der Linie VI-VI in Fig. 5 in Außerbetriebsstellung des Druckreglers.

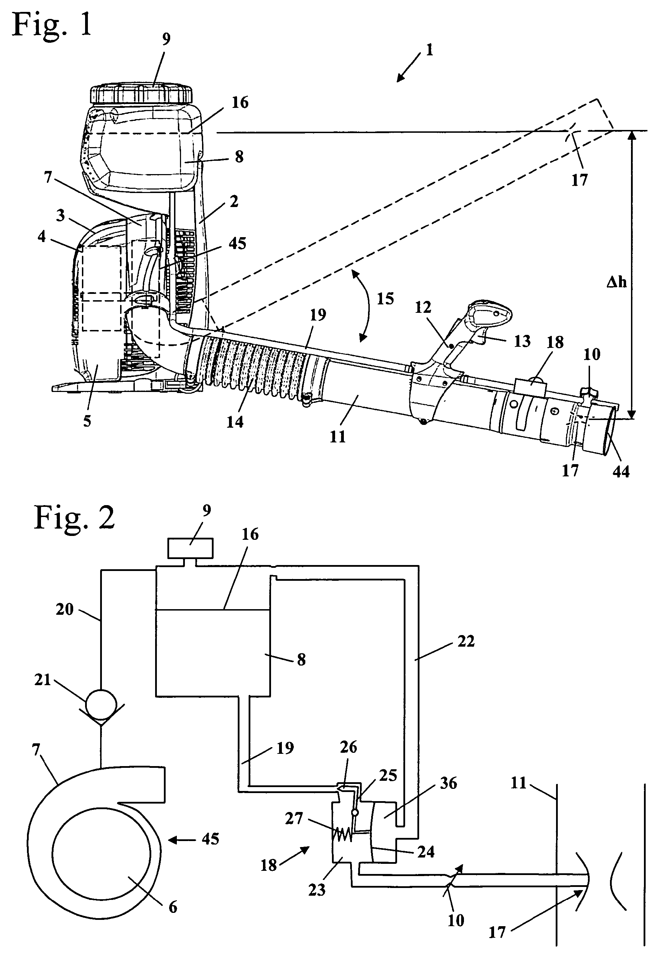

Fig. 1 zeigt ein rückengetragenes Sprühgerät 1. Das Sprühgerät 1 besitzt eine Rückentrage 2, an der nicht gezeigte Schultergurte festgelegt sind, mit denen die Rückentrage 2 vom Benutzer auf dem Rücken getragen werden kann. An der Rückentrage 2 ist ein Gehäuse 3 festgelegt, in dem ein Antriebsmotor 4 angeordnet ist, der ein Gebläse 45 antreibt. Der Antriebsmotor 4 ist als Verbrennungsmotor, insbesondere als Zweitaktmotor oder als gemischgeschmierter Viertaktmotor ausgebildet. Unterhalb des Verbrennungsmotors 4 ist ein Kraftstofftank 5 angeordnet, der in das Gehäuse 3 integriert oder als separates Gehäuseteil ausgebildet sein kann. Oberhalb des Gehäuses 3 ist an der Rückentrage 2 ein Sprühmitteltank 8 festgelegt. In dem Sprühmitteltank 8 ist flüssiges Sprühmittel bis zu einer Füllhöhe 16 eingefüllt. Der Sprühmitteltank 8 ist von einem Tankdeckel 9 verschlossen.

Das Gebläse 45 besitzt eine Gebläsespirale 7, die im Gehäuse 3 integriert ist und an der ein Blasrohr 11 angeschlossen ist. Am Blasrohr 11 ist ein Handgriff 12 festgelegt, an dem ein Gashebel 13 zur Bedienung des Antriebsmotors 4 angeordnet ist. Das Blasrohr 11 besitzt einen Faltenbalgabschnitt 14, so dass das Blasrohr 11 im Betrieb verschwenkt werden kann, wie durch den Pfeil 15 schematisch angedeutet ist. Das Gebläse 45 fördert durch das Blasrohr 11 einen Luftstrom, der das Blasrohr 11 durch eine Austrittsöffnung 44 verlässt. Stromauf der Austrittsöffnung 44 und in geringem Abstand zur Austrittsöffnung 44 ist eine Düse 17 im Blasrohr 11 angeordnet. Die Düse 17 ist über eine Sprühmittelleitung 19 mit dem Innenraum des Sprühmitteltanks 8 verbunden. Benachbart zur Düse 17 ist eine Dosiereinrichtung 10 angeordnet, die vom Bediener manuell einstellbar ist. Stromauf der Dosiereinrichtung 10 und unmittelbar benachbart zur Dosiereinrichtung 10 und zur Austrittsöffnung 44 ist ein Druckregler 18 in der Sprühmittelleitung 19 angeordnet, dessen Funktion im Folgenden noch näher erläutert wird. Die Füllhöhe 16 besitzt zur Düse 17 bei der gezeigten Blasrohrstellung eine Höhendifferenz Δh. Dadurch ergibt sich zwischen dem Sprühmitteltank 8 und der Düse 17 eine Druckdifferenz des Sprühmittels. Wird das Blasrohr 11 in die in Fig. 11 gestrichelt gezeichnete, obere Stellung überführt, liegt die Düse 17 etwa auf der Füllhöhe 16, so dass der hydrostatische Druck an der Düse 17 dem Druck im Sprühmitteltank 8 entspricht. Der Druck an der Düse 17 ist deutlich geringer als in der unteren Position des Blasrohrs 11.

Fig. 2 zeigt schematisch den Aufbau und die Funktion des Druckreglers 18. Der Druckregler 18 ist in der Sprühmittelleitung 19 angeordnet und besitzt einen Regelraum 23, in den die Sprühmittelleitung 19 vom Sprühmitteltank 8 über ein Einlassventil 26 mündet. Das Einlassventil 26 ist an einem Hebel 25 angeordnet, der in Richtung der Schließstellung des Einlassventils 26 von einer Feder 27 beaufschlagt ist. Der Hebel 25 liegt mit seiner dem Einlassventil 26 abgewandten Seite an einer Regelmembran 24 an. Die Regelmembran 24 begrenzt den Regelraum 23 und trennt diesen von einem Kompensationsraum 36. Im Kompensationsraum 36 herrscht der Referenzdruck des Druckreglers 18. Im Ausführungsbeispiel ist der Kompensationsraum 36 über eine Kompensationsleitung 22 mit dem Innenraum des Sprühmitteltanks 8 verbunden, so dass im Kompensationsraum 36 der gleiche Druck herrscht wie im Sprühmitteltank 8.

Vorteilhaft ist der Sprühmitteltank 8 druckbeaufschlagt. Hierzu ist die in Fig. 2 gezeigte Druckleitung 20 vorgesehen, die in einen Überdruckbereich der Gebläsespirale 7 mündet. Wie Fig. 2 auch zeigt, umfasst das Gebläse 45 ein rotierend angetriebenes, in der Gebläsespirale 7 angeordnetes Gebläserad 6. Das Gebläserad 6 ist als Lüfterrad ausgebildet und fördert die Arbeitsluft durch das Blasrohr 11. In der Druckleitung 20 ist ein Rückschlagventil 21 angeordnet, das in Richtung zum Sprühmitteltank 8 öffnet. Bei Druckabfall in der Gebläsespirale 7, beispielsweise, wenn der Bediener vom Gas geht, bleibt der Druck im Sprühmitteltank 8 weitgehend erhalten, so dass bei erneutem Gasgeben bereits Überdruck im Sprühmitteltank 8 herrscht und dieser nicht erst aufgebaut werden muss.

Im Betrieb herrscht in dem Bereich der Sprühmittelleitung 19 stromab des Druckreglers 18 etwa konstanter Druck. Die Höhe des Drucks ist über die Auslegung des Druckreglers 18, beispielsweise die Auslegung der Feder 27, konstruktiv vorgegeben. In einem weiten Bereich der Lage des Blasrohrs 11 ist damit die dem Blasrohr 11 zudosierte Sprühmittelmenge nur abhängig vom Luftstrom, also von der Drehzahl des Antriebsmotors 4. Erst wenn die Düse 17 bei nicht druckbeaufschlagtem Sprühmitteltank 8 oberhalb der Füllhöhe 16 angeordnet wird und bei druckbeaufschlagtem Sprühmitteltank 8 deutlich oberhalb der Füllhöhe 16 angeordnet wird, sinkt der Druck in der Sprühmittelleitung 19 stromab des Druckreglers 18 ab, da auch bei vollständig geöffnetem Druckregler 18 das Druckniveau nicht mehr ausgeglichen werden kann.

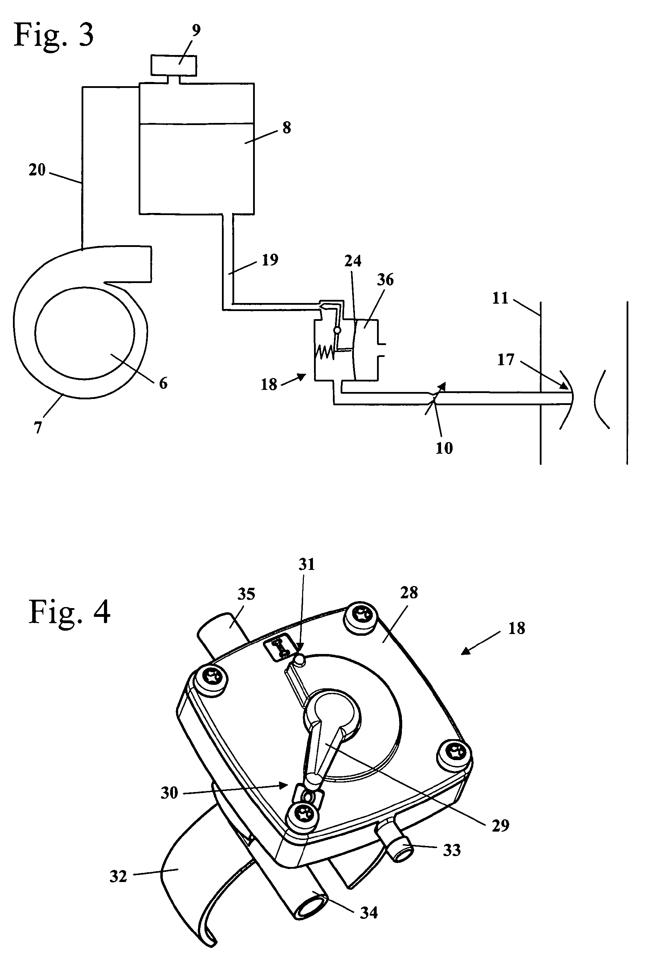

Fig. 3 zeigt ein Ausführungsbeispiel, das im Wesentlichen dem nach Fig. 2 entspricht. Der Kompensationsraum 36 öffnet im Ausführungsbeispiel nach Fig. 3 allerdings in die Umgebung und nicht in den Sprühmitteltank 8. In der Druckleitung 20 ist im Ausführungsbeispiel nach Fig. 3 kein Rückschlagventil 21 angeordnet, so dass sich der Druck im Sprühmitteltank 8 schnell abbaut, wenn der Bediener vom Gas geht. Es kann auch vorgesehen sein, dass der Sprühmitteltank 8 nicht druckbeaufschlagt ist, so dass auch die Druckleitung 20 entfallen kann.

Fig. 4 zeigt den Aufbau des Druckreglers 18 im Einzelnen. Der Druckregler 18 besitzt ein Reglergehäuse 28, an dessen Außenseite ein Bedienelement 29 angeordnet ist, das als Schwenkhebel ausgeführt ist. Der Bedienhebel 29 kann zwischen einer Außerbetriebsstellung 30 des Druckreglers 18 und einer Betriebsstellung 31 des Druckreglers 18 verschwenkt werden. Auch Zwischenstellungen, in denen der Betrieb des Reglers eingeschränkt ist, können vorteilhaft sein. Am Reglergehäuse 28 mündet ein Einlassanschluss 34, sowie ein Kompensationsanschluss 33. Außerdem führt ein Auslassanschluss 35 aus dem Reglergehäuse 28. Am Reglergehäuse 28 ist an der dem Bedienelement 29 abgewandten Seite eine Befestigungsklammer 32 angeformt, mit der der Druckregler 18 ohne zusätzliche Befestigungselemente am Blasrohr 11 festgeklemmt werden kann. Die Befestigungsklammer 32 fixiert das Reglergehäuse 28 aufgrund der Eigenelastizität des Kunststoffs des Reglergehäuses 28 am Blasrohr 11. Die in Fig. 4 gezeigte Befestigungsklammer 32 besitzt eine Öffnung, über die die Befestigungsklammer 32 über das Blasrohr 11 geschoben werden kann. Die Befestigungsklammer 32 umgreift das Blasrohr 11 nur teilweise.

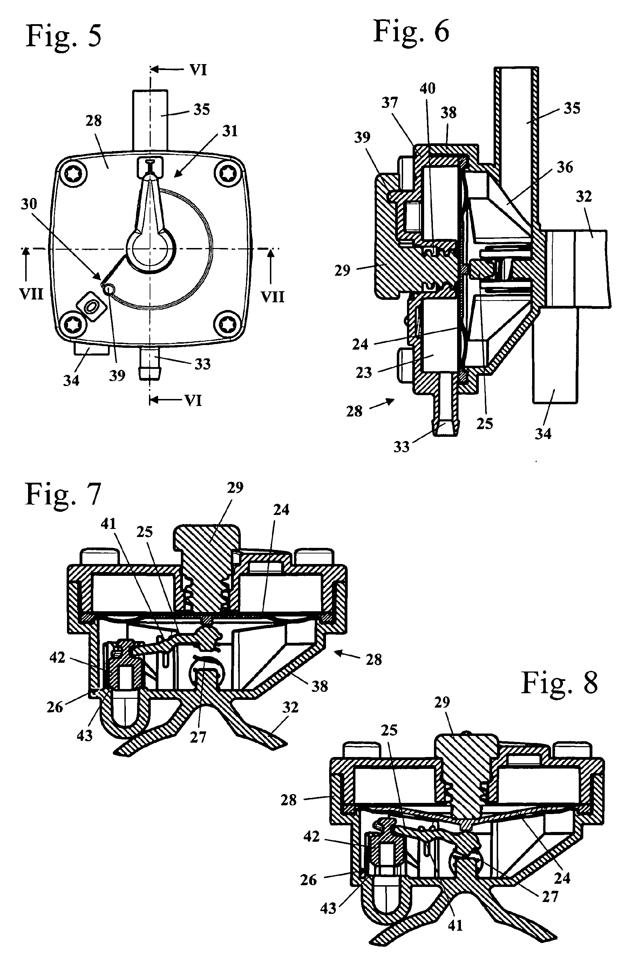

Wie Fig. 5 zeigt, ist zur Festlegung der Außerbetriebsstellung 30 des Bedienelements 29 ein Rastzapfen 39 am Reglergehäuse 28 angeformt.

Wie die Schnittdarstellung in Fig. 6 zeigt, ist ein entsprechender Rastzapfen 39 für die Betriebsstellung 31 vorgesehen. Das Bedienelement 29 liegt in der jeweiligen Stellung über dem Rastzapfen 39 und übergreift diesen, um die Raststellung festzulegen. Wie Fig. 6 auch zeigt, besitzt das Reglergehäuse 28 eine obere Gehäuseschale 37, an der das Bedienelement 29 angeordnet ist, sowie eine untere Gehäuseschale 38, an der der Einlassanschluss 34 und der Auslassanschluss 35 ausgebildet sind. In der oberen Gehäuseschale 37 ist der Regelraum 23 ausgebildet und in der unteren Gehäuseschale 38 der Kompensationsraum 36. Zwischen den beiden Gehäuseschalen 37 und 38 ist die Regelmembran 24 geklemmt gehalten. Die beiden Gehäuseschalen 37 und 38 sind miteinander verschraubt. Das Bedienelement 29 ist über ein Gewinde 40 in der oberen Gehäuseschale 37 gehalten. In der in Fig. 6 gezeigten Außerbetriebsstellung 31 liegt die Regelmembran 24 in unbelastetem Zustand des Druckreglers 18 am Bedienelement 29 an und ist nicht ausgelenkt.

An der dem Bedienelement 29 gegenüberliegenden Seite ist der Hebel 25 an der Regelmembran 24 angeordnet.

Wie Fig. 7 zeigt, ist der Hebel 25 an einem Schwenklager 41 im Gehäuse 28 schwenkbar gelagert. Am der Regelmembran 24 abgewandt liegenden Ende ist am Hebel 25 ein Ventilkörper 42 fixiert, der in geschlossener Stellung gegen einen Ventilsitz 43 drückt und mit diesem das Einlassventil 26 bildet. Zwischen dem Hebel 25 und der unteren Gehäuseschale 38 ist die Feder 27 angeordnet. Die Feder 27 ist gegenüberliegend zum Bedienelement 29 am Hebel 25 angeordnet.

Wie Fig. 8 zeigt, ist das Bedienelement 29 in Außerbetriebsstellung 30 weiter in das Reglergehäuse 28 eingeschraubt. In dieser Stellung lenkt das Bedienelement 29 die Regelmembran 24 aus. Dadurch ist der Hebel 25 verschwenkt und der Ventilkörper 42 ist vom Ventilsitz 43 abgehoben. Das Einlassventil 26 ist in dieser Stellung geöffnet, so dass Sprühmittel ungehindert durch den Druckregler 18 strömen kann.

## Patentansprüche

1. Sprühgerät mit einem Antriebsmotor (4) zum Antrieb eines Gebläses (45), mit einem Blasrohr (11), durch das ein Luftstrom vom Gebläse (45) gefördert wird, mit einem Sprühmitteltank (8), der an einer Rückentrage (2) angeordnet ist, und mit einer Düse (17), die über eine Sprühmittelleitung (19) mit dem Sprühmitteltank (8) verbunden ist und die dem durch das Blasrohr (11) geförderten Luftstrom Sprühmittel zuführt,
**dadurch gekennzeichnet, dass** stromauf der Düse (17) ein Druckregler (18) in der Sprühmittelleitung (19) angeordnet ist, wobei der Druckregler (18) und die Düse (17) unmittelbar benachbart zueinander angeordnet sind.

2. Sprühgerät nach Anspruch 1,
**dadurch gekennzeichnet, dass** der Luftstrom das Blasrohr (11) durch eine Austrittsöffnung (44) verlässt, und dass der Druckregler (18) und die Düse (17) benachbart zur Austrittsöffnung (44) an dem Blasrohr (11) angeordnet sind.

3. Sprühgerät nach Anspruch 1 oder 2,
**dadurch gekennzeichnet, dass** eine Dosiereinrichtung (10) für Sprühmittel vorgesehen ist, die zwischen dem Druckregler (18) und der Düse (17) in der Sprühmittelleitung (19) angeordnet ist.

4. Sprühgerät nach einem der Ansprüche 1 bis 3,
**dadurch gekennzeichnet, dass** der Druckregler (18) eine Außerbetriebsstellung (30) besitzt.

5. Sprühgerät nach einem der Ansprüche 1 bis 4,
**dadurch gekennzeichnet, dass** der Druckregler (18) einen Regelraum (23), eine den Regelraum (23) begrenzende Regelmembran (24) und ein Einlassventil (26) in den Regelraum (23) besitzt, wobei die Stellung des Einlassventils (26) an die Stellung der Regelmembran (24) gekoppelt ist.

6. Sprühgerät nach Anspruch 5,
**dadurch gekennzeichnet, dass** das Einlassventil (26) in seine Schließrichtung federbelastet ist.

7. Sprühgerät nach Anspruch 5 oder 6,
**dadurch gekennzeichnet, dass** die dem Regelraum (23) abgewandte Seite der Regelmembran (24) mit Umgebungsdruck beaufschlagt ist.

8. Sprühgerät nach Anspruch 5 **oder 6**,
**dadurch gekennzeichnet, dass** die dem Regelraum (23) abgewandte Seite der Regelmembran (24) mit dem Innenraum des Sprühmitteltanks (8) verbunden ist.

9. Sprühgerät nach einem der Ansprüche 5 bis 8,
**dadurch gekennzeichnet, dass** der Druckregler (18) ein Bedienelement (29) besitzt, das in einer Außerbetriebsstellung (30) die Regelmembran (24) auslenkt und dadurch das Einlassventil (26) öffnet.

10. Sprühgerät nach einem der Ansprüche 1 bis 9,
**dadurch gekennzeichnet, dass** der Sprühmitteltank (8) druckbeaufschlagt ist.

11. Sprühgerät nach Anspruch 10,
**dadurch gekennzeichnet, dass** der Sprühmitteltank (8) über eine Druckleitung (20) mit einem Überdruckbereich des Gebläses (45) verbunden ist.

12. Sprühgerät nach Anspruch 11,
**dadurch gekennzeichnet, dass** das Gebläse (45) ein Gebläserad (6) besitzt, das in einer Gebläsespirale (7) angeordnet ist, wobei die Druckleitung (20) in die Gebläsespirale (7) mündet.

13. Sprühgerät nach Anspruch 11 oder 12,
**dadurch gekennzeichnet, dass** in der Druckleitung (20) ein zum Sprühmitteltank (8) öffnendes Rückschlagventil (21) angeordnet ist.

14. Sprühgerät nach einem der Ansprüche 1 bis 13,
**dadurch gekennzeichnet, dass** der Druckregler (18) über eine das Blasrohr (11) mindestens teilweise umgreifende Befestigungsklammer (32) am Blasrohr (11) festgelegt ist.

## Claims

1. Spraying device having a drive motor (4) to operate a blower (45), having a blowpipe (11), through which an air flow is conveyed from the blower (45), having a spraying medium tank (8) which is arranged on a back support (2), and having a nozzle (17) which is connected via a spraying medium pipe (19) to the spraying medium tank (8) and which feeds spraying medium to the air flow conveyed through the blowpipe (11),
**characterised in that** upstream of the nozzle (17) a pressure regulator (18) is arranged in the spraying medium pipe (19), wherein the pressure regulator (18) and the nozzle (17) are arranged directly adjacently to each other.

2. Spraying device according to claim 1,
**characterised in that** the air flow leaves the blowpipe (11) through an outlet opening (44), and the pressure regulator (18) and the nozzle (17) are arranged adjacently to the outlet opening (44) on the blowpipe (11).

3. Spraying device according to claim 1 or 2,
**characterised in that** a metring means (10) for spraying medium is provided which is arranged between the pressure regulator (18) and the nozzle (17) in the spraying medium pipe (19).

4. Spraying device according to one of claims 1 to 3,
**characterised in that** the pressure regulator (18) has a non-operational position (30).

5. Spraying device according to one of claims 1 to 4,
**characterised in that** the pressure regulator (18) has a regulating space (23), a regulating membrane (24) defining the regulating space (23) and an inlet valve (26) into the regulating space (23), wherein the position of the inlet valve (26) is coupled to the position of the regulating membrane (24).

6. Spraying device according to claim 5,
**characterised in that** the inlet valve (26) is spring-loaded into its closing direction.

7. Spraying device according to claim 5 or 6,
**characterised in that** the side, facing away from the regulating space (23), of the regulating membrane (24) is subjected to environmental pressure.

8. Spraying device according to claim 5 or 6,
**characterised in that** the side, facing away from the regulating space (23), of the regulating membrane (24) is connected to an inner space of the spraying medium tank (8).

9. Spraying device according to one of claims 5 to 8,
**characterised in that** the pressure regulator (18) has an operating element (29) which displaces the regulating membrane (24) in a non-operational position (30) and thereby opens the inlet valve (26).

10. Spraying device according to one of claims 1 to 9,
**characterised in that** the spraying medium tank (8) is subjected to pressure.

11. Spraying device according to claim 10,
**characterised in that** the spraying medium tank (8) is connected via a pressure line (20) to an overpressure area of the blower (45).

12. Spraying device according to claim 11,
**characterised in that** the blower (45) has a blower wheel (6) which is arranged in a blower spiral (7), wherein the pressure line (20) opens out into the blower spiral (7).

13. Spraying device according to claim 11 or 12,
**characterised in that** a non-return valve (21) opening towards the spraying medium tank (8) is arranged in the pressure line (20).

14. Spraying device according to one of claims 1 to 13,
**characterised in that** the pressure regulator (18) is fixed to the blowpipe (11) via a fixing bracket (32) engaging at least partially around the blowpipe (11).

## Revendications

1. Pulvérisateur avec un moteur d'entraînement (4) pour entraîner une soufflante (45), un tube souffleur (11) à travers lequel un flux d'air est refoulé par la soufflante (45), un réservoir de produit de pulvérisation (8) qui est disposé sur un support dorsal (2), et un éjecteur (17) qui est relié par l'intermédiaire d'une conduite de produit de pulvérisation (19) au réservoir (8) et qui amène dans le flux d'air refoulé à travers le tube souffleur (11) du produit de pulvérisation,
**caractérisé en ce qu'**en amont de l'éjecteur (17), un régulateur de pression (18) est disposé dans la conduite de produit de pulvérisation (19), étant précisé que le régulateur de pression (18) et l'éjecteur (17) sont disposés tout près l'un de l'autre.

2. Pulvérisateur selon la revendication 1,
**caractérisé en ce que** le flux d'air quitte le tube souffleur (11) par une ouverture de sortie (44), et **en ce que** le régulateur de pression (18) et l'éjecteur (17) sont disposés sur le tube souffleur (11) près de l'ouverture de sortie (44).

3. Pulvérisateur selon la revendication 1 ou 2,
**caractérisé en ce qu'**il est prévu un dispositif de dosage (10) pour le produit de pulvérisation, qui est disposé dans la conduite de produit de pulvérisation (19) entre le régulateur de pression (18) et l'éjecteur (17).

4. Pulvérisateur selon l'une des revendications 1 à 3,
**caractérisé en ce que** le régulateur de pression (18) présente une position d'arrêt (30).

5. Pulvérisateur selon l'une des revendications 1 à 4,
**caractérisé en ce que** le régulateur de pression (18) comporte un espace de régulation (23), une membrane de régulation (24) qui limite l'espace de régulation (23), et une soupape d'admission (26) qui mène à l'espace de régulation (23), étant précisé que la position de la soupape d'admission (26) est couplée à la position de la membrane de régulation (24).

6. Pulvérisateur selon la revendication 5,
**caractérisé en ce que** la soupape d'admission (26) est contrainte par ressort dans son sens de fermeture.

7. Pulvérisateur selon la revendication 5 ou 6,
**caractérisé en ce que** le côté de la membrane de régulation (24) opposé à l'espace de régulation (23) est soumis à la pression ambiante.

8. Pulvérisateur selon la revendication 5 ou 6,
**caractérisé en ce que** le côté de la membrane de régulation (24) opposé à l'espace de régulation (23) est relié à l'espace intérieur du réservoir de produit de pulvérisation (8).

9. Pulvérisateur selon l'une des revendications 5 à 8,
**caractérisé en ce que** le régulateur de pression (18) comporte un élément d'actionnement (29) qui, dans une position d'arrêt (30), dévie la membrane de régulation (4) et ouvre ainsi la soupape d'admission (26).

10. Pulvérisateur selon l'une des revendications 1 à 9,
**caractérisé en ce que** le réservoir de produit de pulvérisation (8) est soumis à une pression.

11. Pulvérisateur selon la revendication 10,
**caractérisé en ce que** le réservoir de produit de pulvérisation (8) est relié par une conduite de pression (20) à une zone à surpression de la soufflante (45).

12. Pulvérisateur selon la revendication 11,
**caractérisé en ce que** la soufflante (45) comporte une roue de soufflante (6) qui est disposée dans une spirale de soufflante (7), étant précisé que la conduite de pression (20) débouche dans la spirale de soufflante (7).

13. Pulvérisateur selon la revendication 11 ou 12,
**caractérisé en ce que** dans la conduite de pression (20) est disposé un clapet antiretour (21) qui s'ouvre vers le réservoir de produit de pulvérisation (8).

14. Pulvérisateur selon l'une des revendications 1 à 13,
**caractérisé en ce que** le régulateur de pression (18) est fixé au tube souffleur (11) par l'intermédiaire d'une pince de fixation (32) qui entoure au moins en partie ledit tube souffleur (11).
